# FASCICULE DE BREVET EUROPEEN

(11) **EP 3 227 539 B1**
(45) Date de publication et mention de la délivrance du brevet: **01.05.2019**
(21) Numéro de dépôt: 15817460.7
(22) Date de dépôt: 02.12.2015
(51) Int. Cl.: F02C 7/055, B64C 27/04, B64D 33/02

(54) **PLENUM D'ALIMENTATION EN AIR**
LUFTZUFUHRPLENUM
AIR SUPPLY PLENUM

(30) Priorité: 05.12.2014 FR 1461997
(43) Date de publication de la demande: 11.10.2017
(73) Titulaire: Safran Helicopter Engines, 64510 Bordes (FR)
(72) Inventeur: BULOT, Nicolas, 64510 Narcastet (FR); MARCHAND, Fabrice, 64290 Lasseube (FR)
(74) Mandataire: Regimbeau
(86) Numéro de dépôt international: PCT/FR2015/053291
(87) Numéro de publication internationale: WO 2016/087776

(56) Documents cités:
- FR-A1- 2 914 016
- US-A- 3 513 641
- US-A- 3 952 972

## Description

La présente invention concerne le plénum d'alimentation en air d'un moteur.

Plus précisément, elle concerne une forme particulière du plénum d'alimentation en air d'un moteur d'hélicoptère.

### DOMAINE TECHNIQUE GÉNÉRAL ET ETAT DE LA TECHNIQUE

Les moteurs actuels, et plus particulièrement les moteurs d'hélicoptères, rencontrent un problème de création de décollements aérodynamiques au niveau du plénum d'alimentation en air du moteur, en amont de l'entrée d'air du moteur.

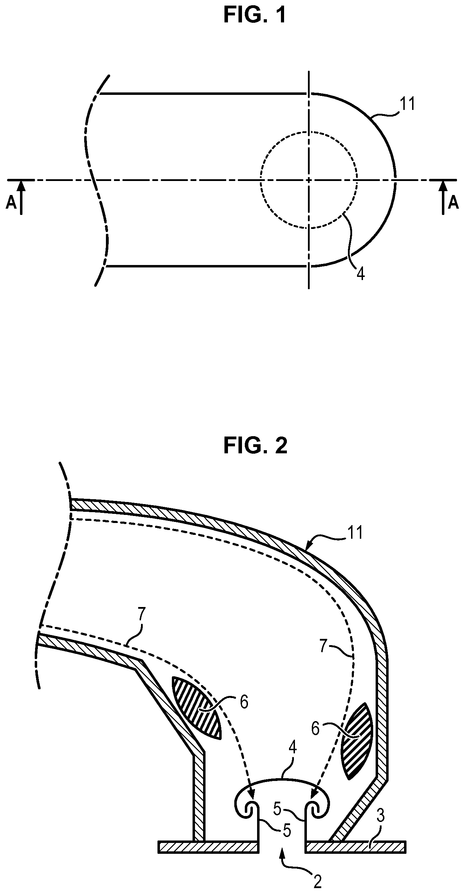

On a représenté sur la figure 1 et la figure 2 un plénum d'alimentation en air selon l'état de la technique qui est disposé au niveau d'une entrée d'air 2 du moteur. L'entrée d'air 2 du moteur est réalisée dans un carter 3 du moteur. Une grille 4 est disposée au niveau de l'entrée d'air 2 dudit moteur. Afin de maintenir en position cette grille 4 au niveau de l'entrée d'air 2 du moteur, l'entrée d'air 2 comprend des lèvres 5 dirigées vers l'extérieur du moteur, et sur lesquelles la grille 4 est disposée. Il se crée, notamment du fait de la présence de ces lèvres 5, des décollements aérodynamiques 6 qui réduisent la largeur du flux d'air 7 dans le plénum 11 et créent des inhomogénéités dans le flux d'air 7, provoquant ainsi un phénomène de pertes aérodynamiques. Ces pertes aérodynamiques au niveau de l'entrée d'air 2 du moteur entrainent une perte de performances globales du moteur.

Afin de solutionner ce problème de pertes de performances du moteur, il est connu d'utiliser un moteur plus puissant afin de compenser ces pertes de performances. Une telle solution conduit à une surconsommation et à une surcharge pour l'hélicoptère, augmentant ainsi le coût horaire pour l'utilisation de l'hélicoptère.

On connaît également d'après le brevet US 3 952 972 un exemple de plenum d'alimentation en air comprenant, au niveau de l'entrée d'air, des parois latérales qui forment une extension courbe et un décrochement de façon à limiter les pertes aérodynamiques et protéger le système d'impacts de morceaux de glace.

Le document FR 2 914 016 décrit une turbine à gaz comprenant un plénum et une entrée d'air faisant saillie à l'intérieur du conduit formé par ledit plénum. Cette entrée d'air s'étend de manière annulaire autour de l'axe de l'arbre de la turbine à gaz, et est munie d'une grille de protection annulaire et essentiellement métallique.

### PRÉSENTATION GÉNÉRALE DE L'INVENTION

Un but général de l'invention est de proposer un plénum d'alimentation en air qui permet d'augmenter les performances du moteur en réduisant l'impact du phénomène d'apparition des décollements aérodynamiques.

Plus particulièrement, selon la revendication 1 et un aspect, l'invention consiste en un ensemble comprenant un plénum d'alimentation en air d'un moteur et une entrée d'air dudit moteur réalisée dans un carter dudit moteur, ledit plénum d'alimentation en air étant disposé en amont de l'entrée d'air du moteur, le plénum d'alimentation en air comprenant une première paroi latérale et une seconde paroi latérale qui forment ensemble un conduit dans lequel s'écoule un flux d'air lors du fonctionnement dudit moteur, l'entrée d'air du moteur comprenant des lèvres qui comprennent d'un bord d'attaque et qui font saillie à l'intérieur du conduit formé par ledit plénum d'alimentation en air, l'entrée d'air du moteur comprenant également une grille de protection disposée sur les lèvres, lesdites lèvres étant adaptées pour maintenir en position la grille de protection, chaque paroi latérale comprenant un décrochement qui forme un renfoncement transversal par rapport à la direction d'écoulement du flux d'air dans le plénum d'alimentation en air, de manière à ce qu'un décollement aérodynamique se forme dans ledit décrochement lors de l'utilisation dudit moteur.

Selon une caractéristique supplémentaire, l'entrée d'air du moteur comprend des lèvres qui comprennent un bord d'attaque et qui font saillie à l'intérieur du conduit formé par ledit plénum d'alimentation en air, l'entrée d'air du moteur comprend également une grille de protection disposée sur les lèvres, lesdites lèvres étant adaptées pour maintenir en position la grille de protection.

Selon une caractéristique particulière, les décrochements sont formés par une rupture brutale de la courbure des parois latérales, la première paroi latérale et la seconde paroi latérale comprenant ainsi chacune une arrête vive, et lesdites parois latérales comprennent chacune deux demi-tangentes au niveau desdites arrêtes.

Selon une autre caractéristique additionnelle, le rapport entre d'une part l'écartement radial entre l'arrête de la première paroi latérale et la grille de protection, et d'autre part l'écartement radial entre le bord d'attaque des lèvres et la grille de protection au droit de la première paroi latérale est compris en 0.1 et 10 ; et le rapport entre d'une part l'écartement radial entre l'arrête de la seconde paroi latérale et la grille de protection, et d'autre part l'écartement radial entre le bord d'attaque des lèvres et la grille de protection au droit de la seconde paroi latérale est compris en 0.1 et 10.

Selon une autre caractéristique additionnelle, le rapport surfacique entre d'une part une surface annulaire délimitée par les décrochements et d'autre une surface annulaire délimitée par le bord d'attaque des lèvres est compris entre 0.1 et 10 fois le rapport surfacique entre d'une part la surface annulaire délimitée par le bord d'attaque des lèvres et d'autre part une surface annulaire délimitée par l'entrée d'air du moteur.

Selon une autre caractéristique, le décrochement de chacune des parois latérales forme un angle de décrochement compris entre 30 degrés et 180 degrés.

Selon une autre caractéristique, le renfoncement formé par chacun des décrochements comprend un angle de fond de renfoncement égal à 90 degrés.

Selon une caractéristique particulière, les parois latérales ne comprennent chacune qu'un unique décrochement.

Selon un autre aspect, l'invention consiste en un moteur comprenant un plénum d'alimentation en air selon l'une quelconques des caractéristiques précédentes.

Selon un aspect supplémentaire, l'invention consiste en un hélicoptère comprenant un tel moteur.

### DESCRIPTIF DES FIGURES

D'autres caractéristiques, buts et avantages de la présente invention apparaitront à la lecture de la description détaillée qui va suivre, et en regard des dessins annexés, donnés à titre d'exemples non limitatifs et sur lesquels :
- la figure 1 représente une vue du dessus d'un plénum d'alimentation en air selon l'état de l'art ;
- la figure 2 représente une vue en coupe selon l'axe AA du plénum d'alimentation en air selon l'état de l'art ;
- la figure 3 représente une vue du dessus d'un plénum d'alimentation en air selon l'invention ;
- la figure 4 représente une vue en coupe selon l'axe BB d'un plénum d'alimentation en air selon un premier mode de réalisation ;
- la figure 5 représente la même vue que la figure 4 sur laquelle les proportions du plénum sont mises en évidences ;
- la figure 6 représente une vue en coupe d'un plénum d'alimentation en air selon un deuxième mode de réalisation.

### DESCRIPTION D'UN OU PLUSIEURS EXEMPLES De MODE DE REALISATION

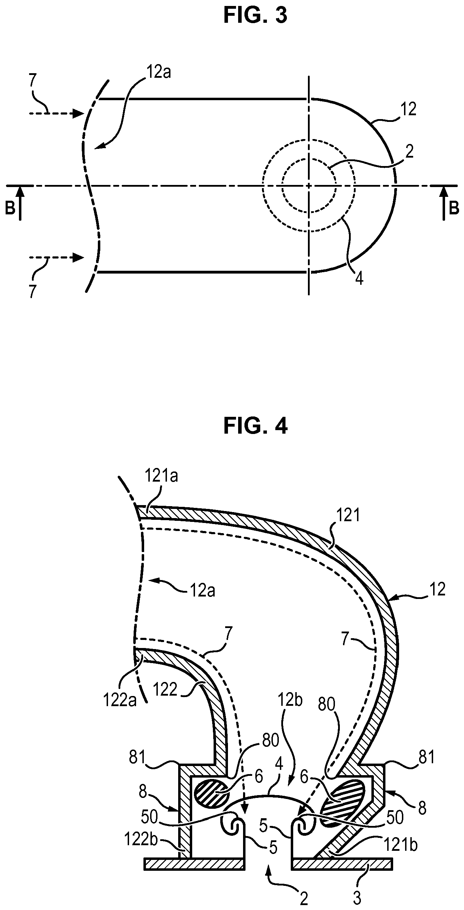

On a représenté sur la figure 3, un plénum d'alimentation en air 12 d'un moteur d'hélicoptère qui est disposée au niveau d'une entrée d'air 2 dudit moteur d'hélicoptère.

Comme représenté sur la figure 4, le plénum 12 comprend une première paroi latérale 121 et une seconde paroi latérale 122 qui forment ensemble un conduit guidant un flux d'air 7 provenant de l'extérieur, vers l'entrée d'air 2 du moteur.

Les deux parois latérales 121 et 122 comprennent chacune deux extrémités 121a, 121b et 122a, 122b. Les premières extrémités 121a, 122a des deux parois latérales 121 et 122 forment une première extrémité 12a du plénum d'alimentation en air 12 par laquelle le flux d'air 7 pénètre dans ledit plénum d'alimentation en air 12. Les secondes extrémités 121b et 122b des deux parois latérales 121 et 122 forment une seconde extrémité 12b du plénum 12 par laquelle le flux d'air 7 pénètre dans l'entrée d'air 2 du moteur.

Le moteur comprend un carter 3 dans lequel est réalisée l'entrée d'air 2 du moteur. Le carter 3 comprend des lèvres 5 qui font saillie à l'intérieur du conduit formé par le plénum d'alimentation en air 12. Les lèvres 5 comprennent un bord d'attaque 50 qui forme une extrémité qui fait saillie à l'intérieur du conduit formé par le plénum d'alimentation en air 12. C'est par le bord d'attaque 50 des lèvres 5 que le flux d'air 7 pénètre dans l'entrée d'air 2.

Les lèvres 5 du carter 3 permettent de maintenir en position une grille de protection 4 qui est disposée en amont de l'entrée d'air 2 du moteur par rapport au sens de l'écoulement de l'air 7. La grille 4 permet de protéger le moteur contre l'ingestion d'objets et la formation de givre. Selon un mode de réalisation possible, l'entrée d'air 2 peut ne pas être protégée par la grille 4.

Afin que la grille 4 puisse réaliser sa fonction protectrice d'une manière optimale, un espacement minimal est nécessaire entre la grille 4 et les parois 121 et 122 du plénum d'alimentation en air 12. En effet, par exemple lors d'une création d'une couche de gel sur la grille 4, afin de ne pas perturber le flux d'air 7, il ne faut pas que la couche de gel rentre en contact avec les parois 121 et 122 du plénum d'alimentation en air 12.

Pour qu'un espace minimum soit créé entre la grille 4 et les parois 121 et 122, les lèvres 5 doivent être également espacées des parois latérales 121 et 122. Cet espacement entre les lèvres 5 et les parois latérales 121 et 122 entraîne nécessairement l'apparition de décollements aérodynamiques 6 entre les deux extrémités 12a et 12b du plénum d'alimentation en air 12.

Afin de réduire la dégradation des performances du moteur causée par la création des décollements aérodynamiques 6, les parois latérales 121 et 122 comprennent chacune un décrochement 8 compris entre leurs deux extrémités 121a, 121b et 122a, 122b. Les décrochements 8 forment chacun un renfoncement vers l'extérieur du plénum d'alimentation en air 12, ledit renfoncement étant transversal à la direction d'écoulement du flux d'air 7 dans le plénum d'alimentation en air 12. D'une façon équivalente, on peut définir les décrochements 8 comme étant des augmentations localisées du diamètre du plénum d'alimentation en air 12.

Les décrochements 8 permettent de contrôler l'apparition des décollements aérodynamiques 6, de sorte que les décollements aérodynamiques 6 se forment à l'intérieur des décrochements 8. Dans un exemple de réalisation, les décrochements 8 sont formés par une rupture brutale de la courbure des parois latérales 121 et 122, de sorte que les parois latérales 121 et 122 forment chacune une arête 80 vive et qu'ainsi les parois 121 et 122 comportent deux demi-tangentes au niveau desdites arêtes vives 80.

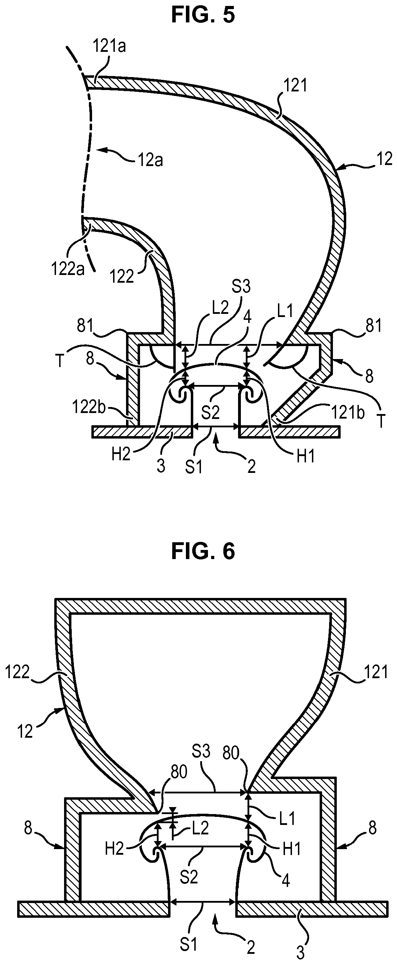

Préférentiellement, comme représenté sur la figure 5, les décrochements 8 de chacune des parois latérales 121 et 122 forment un angle de décrochement T qui est compris entre 30 degrés et 180 degrés. Plus précisément, l'angle de décrochement T est l'angle formé par le changement de courbure des parois latérales 121 et 122. Par exemple, dans le cas où les décrochements 8 sont formés par une rupture brutale de la courbure des parois latérales 121 et 122, l'angle T est l'angle entre les deux demi-tangentes au niveau des arêtes vives 80. Exprimé autrement, l'angle de décrochement T est l'angle formé par les parois latérales 121 et 122 au début du renfoncement formé par le décrochement formé par le décrochement 8, et donc à l'extrémité du renfoncement formé par le décrochement 8 la plus proche de l'entrée d'air 2 (l'extrémité située la plus à l'intérieur du conduit formé par le plénum 12).

Selon un aspect avantageux, les décrochements 8 sont formés par une rupture brutale de la courbure des parois 121 et 122 de telle sorte que le renfoncement formé par les décrochements 8 comprend un angle de fond de renfoncement 81 égale à 90 degrés. Plus précisément, l'angle de fond de renfoncement 81 est l'angle formé par les parois latérales 121 et 122 à la fin du renforcement formé par le décrochement 8, et donc à l'extrémité du renfoncement formé par le décrochement 8 la plus éloignée de l'entrée d'air 2 (l'extrémité située la plus à l'extérieur du conduit formé par le plénum 12).

D'une manière préférentielle, les parois latérales 121 et 122 ont une courbure telle qu'aucun autre décollement aérodynamique 6 ne se forme ailleurs que dans les décrochements 8. Plus précisément, les parois latérales 121 et 122 ne comprennent chacune qu'un seul décrochement 8.

Ainsi, en confinant les décollements 6 dans les décrochements 8, on empêche le phénomène de réduction de la largeur du flux d'air 7, permettant ainsi d'augmenter les performances globales du moteur.

Comme représenté sur la figure 5, l'entrée d'air 2 du moteur délimite une surface annulaire S1, qui correspond à la surface de l'ouverture pratiquée dans le carter 3 dudit moteur, soit π fois le diamètre au carrée de l'entrée d'air 2. Le bord d'attaque 50 des lèvres 5 délimite une surface annulaire S2, qui correspond à π fois le diamètre au carré du cercle formé par le bord d'attaque 50 des lèvres 5. Les décrochements 8 délimitent une surface annulaire S3, qui correspond à π fois le diamètre du carrée du plénum 12 juste avant l'augmentation dudit diamètre du plénum 12 par les décrochements 8.

D'une manière avantageuse, le rapport surfacique entre la surface annulaire S3 et la surface annulaire S2 est compris entre 0.1 et 10 fois le rapport surfacique entre la surface annulaire S2 et la surface annulaire S1. Ainsi, S3/S2 est compris entre 0,1 fois et 10 fois le rapport surfacique S2/S1.

Comme également représenté sur la figure 5, l'arrête 80 de la première paroi latérale 121 est écartée de la grille de protection 4 selon un écartement radial L1. L'arrête 80 de la seconde paroi latérale 122 est écartée de la grille de protection 4 selon un écartement radial L2. Le bord d'attaque 50 des lèvres 5 est d'une part écarté de la grille de protection 4 selon un écartement radial H1 au droit de la première paroi latérale 121 ; et d'autre part écarté de la grille de protection 4 selon un écartement radial H2 au droit de la seconde paroi latérale 122.

Préférentiellement, le rapport d'écartements radiaux entre l'écartement radial L1 et l'écartement radial H1 est compris entre 0.1 et 10, et le rapport d'écartements radiaux entre l'écartement radial L2 et l'écartement radial H2. Ainsi, les rapports entre les écartements radiaux L1/H1 et L2/H2 sont compris en 0.1 et 10.

La réalisation des décrochements 8 entraine une augmentation de l'encombrement du plénum d'alimentation en air 12, et donc de la masse dudit plénum d'alimentation en air 12. Toutefois, les gains de performance du moteur avec un tel plénum d'alimentation en air 12 compensent largement les pertes dues à l'augmentation de la masse. Ainsi, une telle solution permet d'obtenir le compromis optimal entre l'augmentation de la masse du plénum d'alimentation en air 12 et l'augmentation de la largeur et de l'homogénéité du flux d'air 7.

Le deuxième mode de réalisation qui représenté sur la figure 6 est un plénum d'admission d'air 12 qui est représenté selon une vue en coupe selon un axe de coupe qui est perpendiculaire à l'axe de coupe BB des précédentes figures 4 et 5.

Comme représenté sur la figure 6, dans ce deuxième mode de réalisation, le décrochement 8 de la première paroi latérale 121 est réalisé plus en amont que le décrochement 8 de la seconde paroi latérale 122 par rapport à l'entrée d'air 2, contrairement au premier mode de réalisation dans lequel les décrochements 8 sont situés à la même hauteur. Ainsi, l'écartement radial L1 entre l'arrête 80 de la première paroi latérale 121 et la grille de protection 4 est supérieur à l'écartement écartement radial L2 entre l'arrête 80 de la seconde paroi latérale 122 et la grille de protection 4.

D'autres modes de réalisations sont également possibles. Par exemple, les décrochements 8 peuvent ne pas être formés par une rupture brutale de la courbure des parois 121 et 122. Les décrochements 8 peuvent en effet être formés par un coudage des parois latérales 121 et 122 de telle sorte que les parois latérales 121 et 122 comprennent chacune un coude de décrochement arrondi et qu'ainsi les parois latérales 121 et 122 comprennent chacune une unique tangente au niveau du coude de décrochement. Dans cette variante, l'angle de décrochement T est formé par l'angle formé par le coudage des parois latérales 121 et 122.

## Revendications

1. Ensemble comprenant un plénum d'alimentation en air (12) d'un moteur et une entrée d'air (2) dudit moteur réalisée dans un carter (3) dudit moteur, ledit plénum d'alimentation en air (12) étant disposé en amont de l'entrée d'air (2) du moteur, le plénum d'alimentation en air (12) comprenant une première paroi latérale (121) et une seconde paroi latérale (122) qui forment ensemble un conduit dans lequel s'écoule un flux d'air (7) lors du fonctionnement dudit moteur, l'entrée d'air (2) du moteur comprenant des lèvres (5) qui comprennent un bord d'attaque (50) et qui font saillie à l'intérieur du conduit formé par ledit plénum d'alimentation en air (12), l'entrée d'air du moteur comprenant également une grille de protection (4) disposée sur les lèvres (5), lesdites lèvres (5) étant adaptées pour maintenir en position la grille de protection (4), **caractérisé en ce que** chaque paroi latérale (121, 122) comprend un décrochement (8) qui forme un renfoncement transversal par rapport à la direction d'écoulement du flux d'air (7) dans le plénum d'alimentation en air (12), de manière à ce qu'un décollement aérodynamique (6) se forme dans ledit décrochement (8) lors de l'utilisation dudit moteur.

2. Ensemble selon la revendication 1, **caractérisé en ce que** les décrochements (8) sont formés par une rupture brutale de la courbure des parois latérales (121, 122), la première paroi latérale (121) et la seconde paroi latérale (122) comprenant ainsi chacune une arrête (80) vive, et que lesdites parois latérales (121, 122) comprennent chacune deux demi-tangentes au niveau desdites arrêtes (80).

3. Ensemble selon la revendication 2, **caractérisé en ce que** :
- le rapport entre d'une part l'écartement radial (L1) entre l'arrête (80) de la première paroi latérale (121) et la grille de protection (4), et d'autre part l'écartement radial (H1) entre le bord d'attaque (50) des lèvres (5) et la grille de protection (4) au droit de la première paroi latérale (121) est compris en 0.1 et 10 ; et
- le rapport entre d'une part l'écartement radial (L2) entre l'arrête (80) de la seconde paroi latérale (122) et la grille de protection (4), et d'autre part l'écartement radial (H2) entre le bord d'attaque (50) des lèvres (5) et la grille de protection (4) au droit de la seconde paroi latérale (122) est compris en 0.1 et 10.

4. Ensemble selon les revendications 2 et 3, **caractérisé en ce que** le rapport surfacique entre d'une part une surface annulaire (S3) délimitée par les décrochements (8) et d'autre part une surface annulaire (S2) délimitée par le bord d'attaque (50) des lèvres (5) est compris entre 0.1 et 10 fois le rapport surfacique entre d'une part la surface annulaire (S2) délimitée par le bord d'attaque (50) des lèvres (5) et d'autre part une surface annulaire (S1) délimitée par l'entrée d'air du moteur (2).

5. Ensemble selon l'une des revendications précédentes, **caractérisé en ce que** le décrochement (8) de chacune des parois latérales (121, 122) forme un angle de décrochement (T) compris entre 30 degrés et 180 degrés, l'angle de décrochement (T) étant formé par une extrémité du renfoncement formé par le décrochement (8) la plus proche de l'entrée d'air (2).

6. Ensemble selon l'une des revendications précédentes, **caractérisé en ce que** le renfoncement formé par chacun des décrochements (8) comprend un angle de fond de renfoncement (81) égal à 90 degrés, l'angle de fond (81) étant formé par l'extrémité du renfoncement la plus éloignée de l'entrée d'air (2).

7. Ensemble selon l'une quelconque des revendications précédentes, **caractérisé en ce que** les parois latérales (121, 122) ne comprennent chacune qu'un unique décrochement (8).

8. Moteur comprenant un ensemble selon l'une quelconques des revendications 1 à 7.

9. Hélicoptère comprenant un moteur selon la revendication 8.

## Patentansprüche

1. Baugruppe, umfassend ein Luftversorgungsplenum (12) eines Motors und einen Lufteinlass (2) des Motors, der in einem Gehäuse (3) des Motors ausgeführt ist, wobei das Luftversorgungsplenum (12) stromaufwärts des Lufteinlasses (2) des Motors angeordnet ist, wobei das Luftversorgungsplenum (12) eine erste seitliche Wand (121) und eine zweite seitliche Wand (122) umfasst, die gemeinsam eine Leitung bilden, in der beim Betrieb des Motors ein Luftstrom (7) strömt, wobei der Lufteinlass (2) des Motors Lippen (5) umfasst, die eine Vorderflanke (50) umfassen, und die ins Innere der Leitung, die durch das Luftversorgungsplenum (12) gebildet wird, überstehen, wobei der Lufteinlass des Motors auch ein Schutzgitter (4) umfasst, das auf den Lippen (5) angeordnet ist, wobei die Lippen (5) angepasst sind, um das Schutzgitter (4) in Position zu halten, **dadurch gekennzeichnet, dass** jede seitliche Wand (121, 122) eine Ausbuchtung (8) umfasst, die eine querlaufende Vertiefung im Verhältnis zur Strömungsrichtung des Luftstroms (7) in dem Luftversorgungsplenum (12) bildet, sodass sich bei Verwendung des Motors eine aerodynamische Ablösung (6) in der Ausbuchtung (8) bildet.

2. Baugruppe nach Anspruch 1, **dadurch gekennzeichnet, dass** die Ausbuchtungen (8) durch eine jähe Unterbrechung der Biegung der seitlichen Wände (121, 122) gebildet werden, wobei die erste seitliche Wand (121) und die zweite seitliche Wand (122) somit jeweils eine scharfe Kante (80) umfassen, und dass die seitlichen Wände (121, 122) jeweils zwei Halbtangenten im Bereich der Kanten (80) umfassen.

3. Baugruppe nach Anspruch 2, **dadurch gekennzeichnet, dass**:
- das Verhältnis zwischen einerseits dem radialen Abstand (L1) zwischen der Kante (80) der ersten seitlichen Wand (121) und dem Schutzgitter (4), und andererseits dem radialen Abstand (H1) zwischen der Vorderflanke (50) der Lippen (5) und dem Schutzgitter (4) auf Höhe der ersten seitlichen Wand (121) zwischen 0,1 und 10 enthalten ist; und
- das Verhältnis zwischen einerseits dem radialen Abstand (L2) zwischen der Kante (80) der zweiten seitlichen Wand (122) und dem Schutzgitter (4), und andererseits dem radialen Abstand (H2) zwischen der Vorderflanke (50) der Lippen (5) und dem Schutzgitter (4) auf Höhe der zweiten seitlichen Wand (122) zwischen 0,1 und 10 enthalten ist.

4. Baugruppe nach den Ansprüchen 2 und 3, **dadurch gekennzeichnet, dass** das Oberflächenverhältnis zwischen einerseits einer ringförmigen Oberfläche (S3), die durch die Ausbuchtungen (8) eingegrenzt wird, und andererseits einer ringförmigen Oberfläche (S2), die durch die Vorderflanke (50) der Lippen (5) eingegrenzt wird, zwischen 0,1 und 10 Mal dem Oberflächenverhältnis zwischen einerseits der ringförmigen Oberfläche (S2), die durch die Vorderflanke (50) der Lippen (5) eingegrenzt wird, und andererseits einer ringförmigen Oberfläche (S1), die durch den Lufteinlass des Motors (2) eingegrenzt wird, enthalten ist.

5. Baugruppe nach einem der vorstehenden Ansprüche, **dadurch gekennzeichnet, dass** die Ausbuchtung (8) jeder der seitlichen Wände (121, 122) einen Ausbuchtungswinkel (T) bildet, der zwischen 30 Grad und 180 Grad enthalten ist, wobei der Ausbuchtungswinkel (T) durch ein Ende der Vertiefung, die durch die Ausbuchtung (8) gebildet wird, das dem Lufteinlass (2) am nächsten ist, gebildet wird.

6. Baugruppe nach einem der vorstehenden Ansprüche, **dadurch gekennzeichnet, dass** die Vertiefung, die durch jede der Ausbuchtungen (8) gebildet wird, einen Vertiefungsbodenwinkel (81) gleich 90 Grad umfasst, wobei der Bodenwinkel (81) durch das Ende der Vertiefung gebildet wird, das am weitesten von dem Lufteinlass (2) entfernt ist.

7. Baugruppe nach einem der vorstehenden Ansprüche, **dadurch gekennzeichnet, dass** die seitlichen Wände (121, 122) jeweils nur eine einzige Ausbuchtung (8) umfassen.

8. Motor, eine Baugruppe nach einem der Ansprüche 1 bis 7 umfassend.

9. Helikopter, einen Motor nach Anspruch 8 umfassend.

## Claims

1. Assembly comprising an air supply plenum (12) for an engine and an air intake (2) of said engine being provided in a casing (3) of said engine, said air supply plenum (12) being arranged upstream of the air intake (2) of the engine, the air supply plenum (12) comprising a first lateral wall (121) and a second lateral wall (122) which together form a conduit wherein an air flow (7) flows during the operation of said engine, the air intake (2) of the engine comprising lips (5) which include a leading edge (50) and which protrude inside the conduit formed by said air supply plenum (12), the air intake of the engine also comprising a protective grid (4) arranged on the lips (5), said lips (5) being suitable for maintaining in position the protective grid (4), **characterised in that** each lateral wall (121, 122) comprises a notch (8) that forms a transverse recess in relation to the direction of flow of the air flow (7) in the air supply plenum in (12), in such a way that an aerodynamic separation (6) is formed in said notch (8) during the use of said engine.

2. Assembly according to claim 1, **characterised in that** the notches (8) are formed by an abrupt rupture in the curvature of the lateral walls (121, 122), the first lateral wall (121) and the second lateral wall (122) each thus comprising a sharp edge (80), and that said lateral walls (121, 122) each include two demi-tangents on said edges (80).

3. Assembly according to claim 2, **characterised in that**:
- the ratio between on the one hand the radial separation (L1) between the edge (80) of the first lateral wall (121) and the protective grid (4), and on the other hand the radial separation (H1) between the leading edge (50) of the lips (5) and the protective grid (4) in line with the first lateral wall (121) is between 0.1 and 10; and
- the ratio between on the one hand the radial separation (L2) between the edge (80) of the second lateral wall (122) and the protective grid (4), and on the other hand the radial separation (H2) between the leading edge (50) of the lips (5) and the protective grid (4) in line with second lateral wall (122) is between 0.1 and 10.

4. Assembly according to claims 2 and 3, **characterised in that** the area ratio between on the one hand an annular surface (S3) delimited by the notches (8) and on the other hand an annular surface (S2) delimited by the leading edge (50) of the lips (5) is between 0.1 and 10 times the area ratio between on the one hand the annular surface (S2) delimited by the leading edge (50) of the lips (5) and on the other hand an annular surface (S1) delimited by the air intake of the engine (2).

5. Assembly according to one of the preceding claims, **characterised in that** the notch (8) of each one of the lateral walls (121, 122) forms a notch angle (T) between 30 degrees and 180 degrees, the notch angle (T) being formed by an end of the recess formed by the notch (8) that is closest to the air intake (2).

6. Assembly according to one of the preceding claims, **characterised in that** the recess formed by each one of the notches (8) comprises a recess bottom angle (81) equal to 90 degrees, the bottom angle (81) being formed by the end of the recess that is farthest from the air intake (2).

7. Assembly according to any preceding claim, **characterised in that** the lateral walls (121, 122) each include only a single notch (8).

8. Engine comprising an assembly according to any of claims 1 to 7.

9. Helicopter comprising an engine according to claim 8.
